# FASCICULE DE BREVET EUROPEEN

(11) **EP 1 986 915 B1**
(45) Date de publication et mention de la délivrance du brevet: **02.12.2009**
(21) Numéro de dépôt: 07730971.4
(22) Date de dépôt: 14.02.2007
(51) Int. Cl.: B64D 43/00, G01C 23/00

(54) **PROCEDE ET DISPOSITIF DE DETECTION D'UNE DISSYMETRIE LATERALE D'UN AERONEF**
VERFAHREN UND VORRICHTUNG ZUM ERKENNEN EINER SEITLICHEN DISSYMMETRIE EINES FLUGZEUGS
METHOD AND DEVICE FOR DETECTING A LATERAL DISSYMMETRY OF AN AIRCRAFT

(30) Priorité: 20.02.2006 FR 0601454
(43) Date de publication de la demande: 05.11.2008
(73) Titulaire: AIRBUS OPERATIONS, 31060 Toulouse (FR)
(72) Inventeur: BOE, Régis, F-31490 LEGUEVIN (FR); CHATRENET, Dominique, F-31700 CORNEBARRIEU (FR)
(74) Mandataire: Hauer, Bernard
(86) Numéro de dépôt international: PCT/FR2007/000259
(87) Numéro de publication internationale: WO 2007/096501

(56) Documents cités:
- US-A- 4 521 060
- US-A- 5 358 199
- US-A- 5 686 907
- US-A1- 2005 030 204

## Description

La présente invention concerne un procédé et un dispositif de détection d'une dissymétrie latérale d'un aéronef, en particulier d'un avion de transport.

Une telle dissymétrie latérale apparaît lorsque des surfaces de commande de roulis usuelles de l'aéronef sont positionnées à proximité de leurs butées, sans avoir été commandées par le pilote de l'aéronef.

Selon l'invention, ledit procédé de détection d'une dissymétrie latérale d'un aéronef est remarquable en ce que :
a) on détermine la valeur courante d'un paramètre de commande qui est représentatif de l'ensemble des surfaces de commande dé roulis dé l'aéronef ;
b) on compare cette valeur courante dudit paramètre de commande à une valeur de référence prédéterminée, par exemple 16° ;
c) on détermine un angle de déflexion courant d'un manche latéral de l'aéronef, qui est susceptible d'être actionné par un pilote de l'aéronef pour commander lesdites surfaces de commande de roulis ;
d) on compare cet angle de déflexion courant à une valeur d'angle prédéterminée, par exemple 10° ; et
e) si à la fois ladite valeur courante dudit paramètre de commande est supérieure à ladite valeur de référence et ledit angle de déflexion courant est supérieur à ladite valeur d'angle, on émet un signal d'alerte visuel sur au moins un écran de visualisation du poste de pilotage de l'aéronef, qui signale la détection d'une dissymétrie latérale de l'aéronef.

A l'étape e), ledit signal d'alerte visuel peut correspondre, de façon avantageuse :
- à la présentation d'un signe caractéristique (illustrant un objectif de dérapage que doit réaliser le pilote en agissant sur le palonnier et sur le manche latéral de l'aéronef) sur un écran primaire de pilotage, par exemple de type PFD ("Primary Flight Display" en anglais), de l'aéronef; et/ou
- au clignotement de signes caractéristiques qui illustrent des volets de l'aéronef et qui sont affichés sur un écran d'un système de contrôle et d'affichage, par exemple de type CDS ("Control and Display System" en anglais), de l'aéronef.

On peut toutefois également prévoir d'émettre un signal d'alerte non visuel, par exemple un signal d'alerte sonore, à ladite étape e), lorsqu'une dissymétrie latérale a été détectée.

Dans un mode de réalisation particulier, avant de comparer à l'étape b) la valeur courante dudit paramètre de commande à la valeur de référence, on réalise un filtrage temporel de ladite valeur courante. Ceci permet de détecter une dissymétrie latérale permanente, tout en évitant d'émettre un signal d'alerte lors de manoeuvres dynamiques transitoires pour lesquelles les conditions précitées de déclenchement d'alerte seraient remplies.

La présente invention concerne également un dispositif de détection d'une dissymétrie latérale d'un aéronef, en particulier d'un avion de transport.

Selon l'invention, ledit dispositif de détection est remarquable en ce qu'il comporte :
- un premier moyen pour déterminer la valeur courante d'un paramètre de commande qui est représentatif de l'ensemble des surfaces de commande de roulis de l'aéronef ;
- un deuxième moyen pour comparer cette valeur courante dudit paramètre de commande à une valeur de référence prédéterminée
- un troisième moyen pour déterminer un angle de déflexion courant d'un manche latéral de l'aéronef, qui est susceptible d'être actionné par un pilote de l'aéronef pour commander lesdites surfaces de commande de roulis ;
- un quatrième moyen pour comparer cet angle de déflexion courant à une valeur d'angle prédéterminée ; et
- un cinquième moyen :
   ■ qui comprend au moins un écran de visualisation, par exemple un écran primaire de pilotage ou un écran d'un système de contrôle et d'affichage de l'aéronef, et de préférence une porte logique ET ; et
   ■ qui est susceptible d'émettre un signal d'alerte visuel sur ledit écran de visualisation, pour signaler la détection d'une dissymétrie latérale, lorsque à la fois ladite valeur courante dudit paramètre de commande est supérieure à ladite valeur de référence et ledit angle de déflexion courant est supérieur à ladite valeur d'angle.

En outre, dans un mode de réalisation particulier, ledit dispositif de détection comporte, de plus, un moyen de filtrage temporel qui est agencé entre lesdits premier et deuxième moyens.

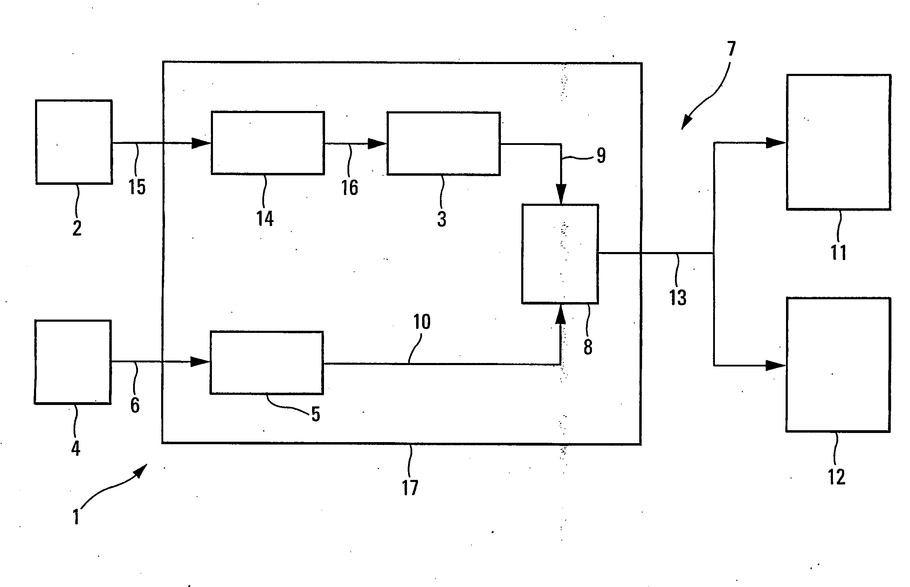

L'unique figure du dessin annexé fera bien comprendre comment l'invention peut être réalisée. Cette figure unique est le schéma synoptique d'un dispositif de détection conforme à l'invention.

Le dispositif 1 conforme à l'invention et représenté schématiquement sur la figure est destiné à détecter une dissymétrie latérale d'un aéronef, en particulier d'un avion de transport, non représenté. On sait qu'une telle dissymétrie latérale apparaît lorsque des surfaces de commande de roulis usuelles (non représentées) de l'aéronef sont positionnées à proximité de leurs butées, sans avoir été commandées pour cela par le pilote de l'aéronef.

Pour ce faire, ledit dispositif de détection 1 comporte, selon l'invention :
- un moyen 2 pour déterminer la valeur courante d'un paramètre de commande interne calculateur, qui est représentatif de l'ensemble des surfaces de commande de roulis de l'aéronef. Ce paramètre est l'image de la quantité de manche latéral qui serait nécessaire dans le cas d'une liaison pilote - gouverne directe. Pour un aéronef piloté par objectif, les gouvernes peuvent être braquées alors que le pilote n'agit pas sur le manche latéral ;
- un moyen 3 pour comparer cette valeur courante dudit paramètre de commande à une valeur de référence prédéterminée enregistrée, par exemple 16° ;
- un moyen 4 usuel, qui est associé à un manche latéral (non représenté) de l'aéronef, par exemple de type minimanche, et qui est formé de manière à déterminer un angle de déflexion courant dudit manche latéral. Ce manche latéral est susceptible d'être actionné, de façon usuelle, par un pilote de l'aéronef pour commander lesdites surfaces de commande de roulis ;
- un moyen 5 qui est relié par l'intermédiaire d'une liaison 6 audit moyen 4 et qui est destiné à comparer l'angle de déflexion courant reçu dudit moyen 4 à une valeur d'angle prédéterminée enregistrée, par exemple 10°; et.
- un moyen 7 qui est destiné à détecter et à signaler une dissymétrie latérale de l'aéronef, en fonction des comparaisons mises en oeuvre par lesdits moyens 3 et 5.

Selon l'invention, ledit moyen 7 comporte une porte logique ET 8, qui est reliée par l'intermédiaire de liaisons 9 et 10 respectivement auxdits moyens 3 et 5. Cette porte logique ET 8 est formée de manière à émettre un signal de détection d'une dissymétrie latérale, lorsqu'à la fois :
- la valeur courante dudit paramètre de commande est supérieure à ladite valeur de référence ; et
- ledit angle de déflexion courant du manche latéral est supérieur à ladite valeur d'angle.

Ledit moyen 7 comporte, de plus, des écrans de visualisation 11 et 12 qui sont reliés par l'intermédiaire d'une liaison 13 à la sortie de ladite porte logique ET 8 et qui sont formés de manière à émettre un signal d'alerte visuel lors de la détection d'une dissymétrie latérale.

Dans un mode de réalisation particulier, ledit moyen 7 peut également comporter un élément usuel (non représenté) qui est susceptible d'émettre un signal d'alerte non visuel, et notamment un signal d'alerte sonore, lorsqu'une dissymétrie latérale est détectée.

En outre, dans un mode de réalisation préféré, ledit dispositif de détection 1 comporte, de plus, un moyen de filtrage usuel 14 qui est relié par l'intermédiaire de liaisons 15 et 16 respectivement auxdits moyens 2 et 3 et qui est formé de manière à réaliser un filtrage temporel de la valeur courante du paramètre de commande, déterminée par ledit moyen 2, avant de la transmettre audit moyen 3. De préférence, le filtrage temporel mis en oeuvre par ce moyen de filtrage 14 utilise, comme valeur de seuil, 3 secondes de manière à conserver uniquement les valeurs courantes qui gardent la même valeur pendant au moins 3 secondes. Ceci permet de détecter une dissymétrie latérale permanente, tout en évitant d'émettre un signal d'alerte lors de manoeuvres dynamiques transitoires (inférieures à 3 secondes) pour lesquelles les conditions précitées de déclenchement d'alerte seraient remplies.

Dans un mode de réalisation particulier, lesdits moyens 3, 5, 8 et 14 sont intégrés dans un calculateur 17, par exemple un calculateur primaire de type PRIM.

En outre, dans un mode de réalisation préféré, ledit écran de visualisation 1 est un écran primaire de pilotage de l'aéronef, par exemple de type PFD ("Primary Flight Display" en anglais), et le signal d'alerte engendré en cas de détection d'une dissymétrie latérale correspond à la présentation sur cet écran primaire de pilotage 11 d'un signe caractéristique illustrant un objectif de dérapage que doit réaliser le pilote en agissant sur le palonnier et sur le manche latéral de l'aéronef.

En outre, ledit écran de visualisation 12 peut être un écran d'un système de contrôle et d'affichage de l'aéronef, par exemple de type CDS ("Control and Display System" en anglais). Dans ce cas, le signal d'alerte visuel peut correspondre au clignotement de signes caractéristiques qui illustrent des volets de l'aéronef et qui sont affichés sur cet écran de visualisation 12.

Le dispositif 1 conforme à l'invention présente notamment les avantages suivants :
- il permet de prévenir que l'aéronef est proche de ses limites de capacités à contrôler le roulis, alors que le pilote n'en est pas forcément conscient ; et
- il permet de prévenir une situation de dissymétrie (dissymétrie carburant, embarquement de surfaces, ...) que les systèmes n'auraient pas détectée.

## Revendications

1. Procédé de détection d'une dissymétrie latérale d'un aéronef, **caractérisé en ce que** :
a) on détermine la valeur courante d'un paramètre de commande qui est représentatif de l'ensemble des surfaces de commande de roulis de l'aéronef ;
b) on compare cette valeur courante dudit paramètre de commande à une valeur de référence prédéterminée ;
c) on détermine un angle de déflexion courant d'un manche latéral de l'aéronef, qui est susceptible d'être actionné par un pilote de l'aéronef pour commander lesdites surfaces de commande de roulis ;
d) on compare cet angle de déflexion courant à une valeur d'angle prédéterminée ; et
e) si à la fois ladite valeur courante dudit paramètre de commande est supérieure à ladite valeur de référence et ledit angle de déflexion courant est supérieur à ladite valeur d'angle, on émet un signal d'alerte visuel sur au moins un écran de visualisation (11, 12) du poste de pilotage de l'aéronef, qui signale la détection d'une dissymétrie latérale de l'aéronef.

2. Procédé selon la revendication 1,
**caractérisé en ce que**, avant de comparer à l'étape b) la valeur courante dudit paramètre de commande à la valeur de référence, on réalise un filtrage temporel de ladite valeur courante.

3. Procédé selon l'une des revendications 1 et 2,
**caractérisé en ce que** ladite valeur de référence est égale à 16°.

4. Procédé selon l'une quelconque des revendications 1 à 3,
**caractérisé en ce que** ladite valeur d'angle est égale à 10°.

5. Procédé selon l'une quelconque des revendications précédentes, **caractérisé en ce qu'**à l'étape e), ledit signal d'alerte visuel correspond à la présentation, sur un écran primaire de pilotage (11) de l'aéronef, d'un signe caractéristique illustrant un objectif de dérapage que doit réaliser le pilote de l'aéronef.

6. Procédé selon l'une quelconque des revendications précédentes, **caractérisé en ce qu'**à l'étape e), ledit signal d'alerte visuel correspond au clignotement de signes caractéristiques qui illustrent des volets de l'aéronef et qui sont affichés sur un écran (12) d'un système de contrôle et d'affichage de l'aéronef.

7. Procédé selon l'une quelconque des revendication précédentes, **caractérisé en ce qu'**à l'étape e), on émet également un signal d'alerte non visuel.

8. Dispositif de détection d'une dissymétrie latérale d'un aéronef, **caractérisé en ce qu'**il comporte :
- un premier moyen (2) pour déterminer la valeur courante d'un paramètre de commande qui est représentatif de l'ensemble des surfaces de commande de roulis de l'aéronef ;
- un deuxième moyen (3) pour comparer cette valeur courante dudit paramètre de commande à une valeur de référence prédéterminée ;
- un troisième moyen (4) pour déterminer un angle de déflexion courant d'un manche latéral de l'aéronef, qui est susceptible d'être actionné par un pilote de l'aéronef pour commander lesdites surfaces de commande de roulis ;
- un quatrième moyen (5) pour comparer cet angle de déflexion courant à une valeur d'angle prédéterminée ; et
- un cinquième moyen (7) qui comprend au moins un écran de visualisation (11, 12) et qui est susceptible d'émettre un signal d'alerte visuel sur ledit écran de visualisation (11, 12), pour signaler la détection d'une dissymétrie latérale, lorsque à la fois ladite valeur courante dudit paramètre de commande est supérieure à ladite valeur de référence et ledit angle de déflexion courant est supérieur à ladite valeur d'angle.

9. Dispositif selon la revendication 8,
**caractérisé en ce qu'**il comporte, de plus, un moyen de filtrage temporel (14) qui est agencé entre lesdits premier et deuxième moyens (2, 3).

10. Dispositif selon l'une des revendications 8 et 9,
**caractérisé en ce que** ledit écran de visualisation (11) est un écran primaire de pilotage de l'aéronef.

11. Dispositif selon l'une des revendications 8 et 9,
**caractérisé en ce que** ledit écran de visualisation (12) est un écran d'un système de contrôle et d'affichage de l'aéronef.

12. Dispositif selon l'une quelconque des revendications 8 à 11,
**caractérisé en ce que** ledit cinquième moyen (7) comporte une porte logique ET (8) .

13. Aéronef,
**caractérisé en ce qu'**il comporte un dispositif (1) tel que celui spécifié sous l'une quelconque des revendications 8 à 12.

## Claims

1. A method of detecting a lateral dissymmetry of an aircraft, **characterized in that**:
a) the current value of a control parameter is determined which is representative of all the roll control surfaces of the aircraft;
b) this current value of said control parameter is compared with a predetermined reference value;
c) a current deflection angle of a lateral stick of the aircraft is determined, which is likely to be operated by a pilot of the aircraft to control said roll control surfaces;
d) this current deflection angle is compared with a predetermined angle value; and
e) if both said current value of said control parameter is greater than said reference value and said current deflection angle is greater than said angle value, a visual alarm signal is output to at least one display screen (11, 12) of the cockpit of the aircraft, which signals the detection of a lateral dissymmetry of the aircraft.

2. The method as claimed in claim 1,
**characterized in that**, before comparing, in the step b), the current value of said control parameter with the reference value, said current value is filtered time-wise.

3. The method as claimed in one of claims 1 and 2,
**characterized in that** said reference value is equal to 16°.

4. The method as claimed in any one of claims 1 to 3,
**characterized in that** said angle value is equal to 10°.

5. The method as claimed in any one of the preceding claims, **characterized in that**, in the step e), said visual alarm signal corresponds to the presentation, on a primary piloting screen (11) of the aircraft, of a characteristic sign illustrating a side-slip objective that the pilot of the aircraft must achieve.

6. The method as claimed in any one of the preceding claims, **characterized in that**, in the step e), said visual alarm signal corresponds to the blinking of characteristic signs which illustrate flaps of the aircraft and which are displayed on a screen (12) of a control and display system of the aircraft.

7. The method as claimed in any one of the preceding claims, **characterized in that** in the step e), a non-visual alarm signal is also output.

8. A device for detecting a lateral dissymmetry of an aircraft,
**characterized in that** it comprises:
- a first means (2) for determining the current value of a control parameter which is representative of all the roll control surfaces of the aircraft;
- a second means (3) for comparing this current value of said control parameter with a predetermined reference value;
- a third means (4) for determining a current deflection angle of a lateral stick of the aircraft, which is likely to be operated by a pilot of the aircraft to control said roll control surfaces;
- a fourth means (5) for comparing this current deflection angle with a predetermined angle value; and
- a fifth means (7) which comprises at least one display screen (11, 12) and which can output a visual alarm signal on said display screen (11, 12), to signal the detection of a lateral dissymmetry, when both said current value of said control parameter is greater than said reference value and said current deflection angle is greater than said angle value.

9. The device as claimed in claim 8,
**characterized in that** it also comprises a time filtering means (14) which is arranged between said first and second means (2, 3).

10. The device as claimed in one of claims 8 and 9,
**characterized in that** said display screen (11) is a primary piloting screen of the aircraft.

11. The device as claimed in one of claims 8 and 9,
**characterized in that** said display screen (12) is a screen of a control and display system of the aircraft.

12. The device as claimed in any one of claims 8 to 11,
**characterized in that** said fifth means (7) comprises an AND logic gate (8).

13. An aircraft,
**characterized in that** it includes a device (1) such as that specified under any one of claims 8 to 12.

## Patentansprüche

1. Verfahren zur Erkennung eines seitlichen Symmetriefehlers eines Luftfahrzeugs, **dadurch gekennzeichnet, dass**
a) der laufende Wert eines Steuerparameters, der für die Gesamtheit der Flächen zum Steuern der Rollbewegung des Luftfahrzeugs steht, bestimmt wird;
b) dieser laufende Wert des Steuerparameters mit einem zuvor festgelegten Referenzwert verglichen wird;
c) ein laufender Auslenkungswinkel eines seitlich angeordneten Steuerhebels des Luftfahrzeugs, welchen ein Pilot des Luftfahrzeugs bestätigen kann, um die Flächen zum Steuern der Rollbewegung einzustellen; bestimmt wird;
d) dieser laufende Auslenkungswinkel mit einem zuvor festgelegten Winkelwert verglichen wird; und,
e) wenn der laufende Wert des Steuerparameters größer als der Referenzwert ist und gleichzeitig der laufende Auslenkungswinkel größer als der Winkelwert ist, ein visuelles Warnsignal, das die Erkennung eines seitlichen Symmetriefehlers des Luftfahrzeugs mitteilt, auf mindestens einem Anzeigebildschirm (11, 12) der Pilotenkanzel des Luftfahrzeugs angezeigt wird.

2. Verfahren nach Anspruch 1,
**dadurch gekennzeichnet, dass** eine zeitliche Filterung des laufenden Wertes vorgenommen wird, bevor in Schritt b) der laufende Wert des Steuerparameters mit dem Referenzwert verglichen wird.

3. Verfahren nach einem der Ansprüche 1 und 2, **dadurch gekennzeichnet, dass** der Referenzwert gleich 16° ist.

4. Verfahren nach einem beliebigen der Ansprüche 1 bis 3, **dadurch gekennzeichnet, dass** der Winkelwert gleich 10° ist.

5. Verfahren nach einem beliebigen der vorhergehenden Ansprüche, **dadurch gekennzeichnet, dass** in Schritt e) das visuelle Warnsignal der Darstellung eines charakteristischen Zeichens auf einem ersten Führungsbildschirm (11) des Luftfahrzeugs entspricht, wobei das Zeichen einen Schiebeflug-Sollwert erläutert, den der Pilot des Luftfahrzeugs erreichen muss.

6. Verfahren nach einem beliebigen der vorhergehenden Ansprüche, **dadurch gekennzeichnet, dass** in Schritt e) das visuelle Warnsignal dem Aufblinken von charakteristischen Zeichen entspricht, welche die Klappen des Luftfahrzeugs darstellen und welche auf einem Bildschirm (12) eines Überwachungs- und Anzeigesystems des Luftfahrzeugs angezeigt werden.

7. Verfahren nach einem beliebigen der vorhergehenden Ansprüche, **dadurch gekennzeichnet, dass** in Schritt e) auch ein nicht-visuelles Warnsignal abgegeben wird.

8. Vorrichtung zur Erkennung eines seitlichen Symmetriefehlers eines Luftfahrzeugs, **dadurch gekennzeichnet, dass** sie Folgendes aufweist:
- ein erstes Mittel (2) zur Bestimmung des laufenden Wertes eines Steuerparameters, der für die Gesamtheit der Flächen zum Steuern der Rollbewegung des Luftfahrzeugs steht;
- ein zweites Mittel (3) zum Vergleichen dieses laufenden Wertes des Steuerparameters mit einem zuvor festgelegten Referenzwert;
- ein drittes Mittel (4) zum Bestimmen eines laufenden Auslenkungswinkels eines seitlich angeordneten Steuerhebels des Luftfahrzeugs, welchen ein Pilot des Luftfahrzeugs bestätigen kann, um die Flächen zum Steuern der Rollbewegung einzustellen;
- ein viertes Mittel (5) zum Vergleichen dieses laufenden Auslenkungswinkels mit einem zuvor festgelegten Winkelwert; und
- ein fünftes Mittel (7), das mindestens einen Anzeigebildschirm (11, 12) umfasst und das auf dem Anzeigebildschirm (11, 12) ein visuelles Warnsignal anzeigen kann, um die Erkennung eines seitlichen Symmetriefehlers mitzuteilen, wenn der laufende Wert des Steuerparameters größer als der Referenzwert ist und gleichzeitig der laufende Auslenkungswinkel größer als der Winkelwert ist.

9. Vorrichtung nach Anspruch 8,
**dadurch gekennzeichnet, dass** sie darüber hinaus ein Mittel zur zeitlichen Filterung (14) aufweist, das zwischen dem ersten und dem zweiten Mittel (2, 3) angeordnet ist.

10. Vorrichtung nach einem der Ansprüche 8 und 9, **dadurch gekennzeichnet, dass** der Anzeigebildschirm (11) ein erster Führungsbildschirm des Luftfahrzeugs ist.

11. Vorrichtung nach einem der Ansprüche 8 und 9, **dadurch gekennzeichnet, dass** der Anzeigebildschirm (12) ein Bildschirm eines Überwachungs- und Anzeigesystems des Luftfahrzeugs ist.

12. Vorrichtung nach einem beliebigen der Ansprüche 8 bis 11, **dadurch gekennzeichnet, dass** das fünfte Mittel (7) ein logisches UND-Gatter (8) aufweist.

13. Luftfahrzeug,
**dadurch gekennzeichnet, dass** es eine Vorrichtung (1) wie diejenige, die in einem beliebigen der Ansprüche 8 bis 12 angegeben ist, aufweist.
